# EUROPÄISCHE PATENTSCHRIFT

(11) **EP 1 262 741 B1**
(45) Veröffentlichungstag und Bekanntmachung des Hinweises auf die Patenterteilung: **01.06.2005**
(21) Anmeldenummer: 02005004.3
(22) Anmeldetag: 06.03.2002
(51) Int. Cl.: G01D 11/28, G02B 27/02, B60K 35/00, G02B 27/01

(54) **Anzeigevorrichtung**
Display apparatus
Dispositif d'affichage

(30) Priorität: 30.05.2001 DE 10126186
(43) Veröffentlichungstag der Anmeldung: 04.12.2002
(73) Patentinhaber: ROBERT BOSCH GMBH, 70442 Stuttgart (DE)
(72) Erfinder: Flohr, Heinrich, 31138 Hildesheim (DE)

(56) Entgegenhaltungen:
- US-A- 4 978 196
- PATENT ABSTRACTS OF JAPAN vol. 1996, no. 02, 29. Februar 1996 (1996-02-29) & JP 07 277030 A (TOYOTA MOTOR CORP), 24. Oktober 1995 (1995-10-24)
- PATENT ABSTRACTS OF JAPAN vol. 2000, no. 05, 14. September 2000 (2000-09-14) & JP 2000 047134 A (SHIMADZU CORP), 18. Februar 2000 (2000-02-18)

## Beschreibung

### Stand der Technik

Die Erfindung geht aus von einer Anzeigevorrichtung nach der Gattung des Anspruches 1. Es sind schon Anzeigevorrichtungen in Fahrzeugen bekannt, insbesondere Flüssigkristallzellen, die in einem Kombiinstrument vor einem Fahrer oder in einer Mittelkonsole angeordnet sind und die durch geeignete Lichtquellen hinterleuchtet werden. Hierbei ist eine Hinterleuchtungslichtquelle zur flächigen und homogenen Hinterleuchtung an die Anzeige anzupassen und hinter dieser zu montieren. Ferner sind reflexive Flüssigkristallanzeigen bekannt, die durch Reflektion von Tageslicht oder durch eine direkt vor der Anzeige angeordnete Beleuchtungsvorrichtung beleuchtbar sind. Hierdurch ist einerseits die Ausnutzung von Tageslicht für die Anzeigenbeleuchtung möglich, andererseits kann sich durch eine Frontbeleuchtung der Kontrast der Anzeige verschlechtern. Zudem können bauliche Probleme durch eine Anordnung der Frontbeleuchtung in einem Raum vor der Anzeige auftreten.

Aus der JP 07-277 030 ist ein Head-Up-Display bekannt, bei dem eine am Fahrzeugdach angeordnete reflexive Flüssigkristallanzeige von einer in der Instrumententafel angeordneten Lichtquelle beleuchtet wird. Das von der reflexiven Flüssigkristallanzeige reflektierte Licht wird auf einen Spiegel in der Instrumententafel gelenkt, von wo aus es auf die Windschutzscheibe gelenkt wird, um dort ein virtuelles Bild zu erzeugen.

Aus der US 4,978,196 ist ein Head-Up-Display bekannt, bei dem ein Bild über einen Spiegel am Fahrzeugdach auf einen an der Instrumententafel angeordneten Spiegel so gelenkt wird, dass für den Fahrer ein virtuelles Bild sichtbar ist.

### Vorteile der Erfindung

Die erfindungsgemäße Anzeigevorrichtung mit den Merkmalen des Anspruches 1 hat demgegenüber den Vorteil, dass eine Beleuchtungsvorrichtung der reflexiven Anzeige an einem Fahrzeugdach oder an einem an das Fahrzeugdach grenzenden Bereich einer Windschutzscheibe angeordnet ist. Hierdurch kann auf die direkte Anordnung einer Frontbeleuchtung vor der reflexiven Anzeige verzichtet werden. Ferner stehen an dem Fahrzeugdach größere mögliche Einbauvolumina zur Verfügung als unmittelbar vor der Anzeige, so dass eine homogene Beleuchtung mit leistungsfähigeren Lichtquellen, die gegebenenfalls einen größeren Bauraum benötigen, möglich ist. Ferner kann durch die getrennt von der Anzeige angeordnete Beleuchtung die reflexive Anzeige an ihrem Montageort selbst sehr flach ausgeführt werden.

Besonders vorteilhaft ist, die reflexive Anzeige in einer Mittelkonsole des Fahrzeugs anzuordnen, da in diesem Bereich eine Beeinflussung des Strahlengangs durch einen Fahrer oder Beifahrer des Fahrzeugs nahezu ausgeschlossen werden kann.

Durch die in den abhängigen Ansprüchen aufgeführten Maßnahmen sind vorteilhafte Weiterbildungen und Verbesserungen der im Anspruch 1 angegebenen Anzeigevorrichtung möglich.

Weiterhin ist vorteilhaft, das Licht der Beleuchtungsvorrichtung auf die reflexive Anzeige zu fokussieren, so dass eine Blendung eines Fahrers vermieden wird.

Weiterhin ist vorteilhaft, das Licht der Beleuchtungsvorrichtung polarisiert abzustrahlen, da insbesondere bei einer Verwendung einer Flüssigkristallzelle durch einen aufgelegten Polarisationsfilter nur ein an diese Position angepasster Teil des Lichtes genutzt wird.

Hierdurch kann die für die Beleuchtung benötigte Lichtmenge bei gleicher Anzeigenhelligkeit um die Hälfte reduziert werden.

Weiterhin ist vorteilhaft, die Helligkeit der Beleuchtungsvorrichtung in Abhängigkeit von einer Umgebungshelligkeit zu steuern, so dass eine zusätzliche Anzeigenbeleuchtung z.B. nur bei nicht ausreichendem Tageslicht erfolgt. Ferner wird durch eine entsprechende Dimmung der Beleuchtungsvorrichtung auch eine Blendung bei Nacht vermieden.

### Zeichnung

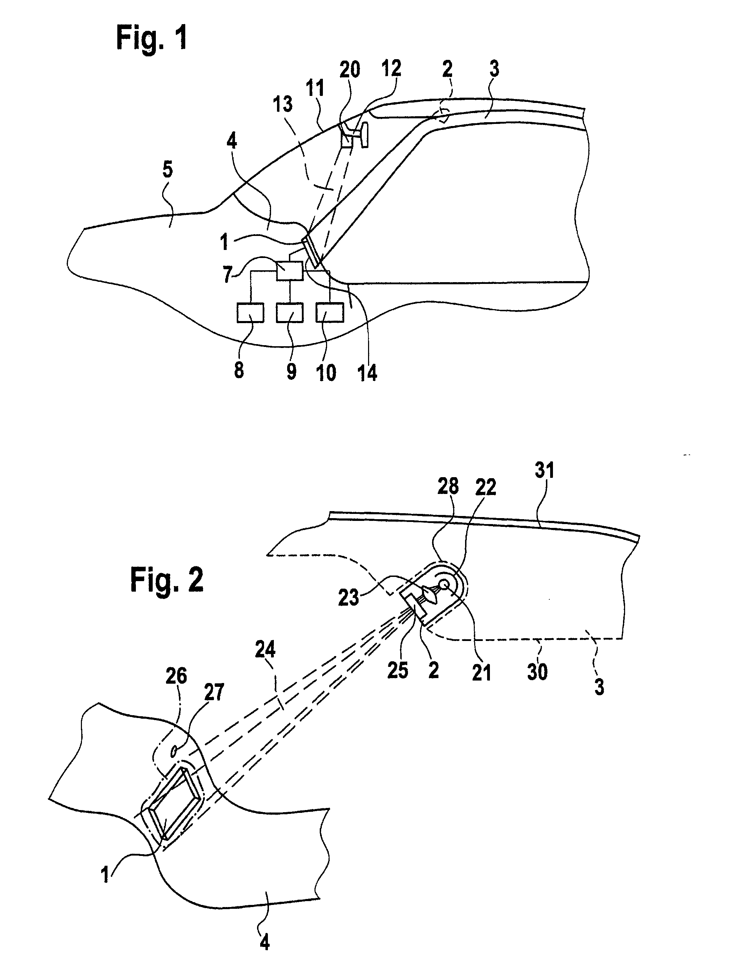

Ausführungsbeispiele der Erfindung sind in der Zeichnung dargestellt und in der nachfolgenden Beschreibung näher erläutert. Es zeigen Figur 1 eine Ansicht einer erfindungsgemäßen Anzeigevorrichtung in einem Schnitt durch einen Umgebungsbereich einer Instrumententafel in einem Fahrzeug, Figur 2 eine erfindungsgemäße Anzeigevorrichtung mit einer Beleuchtungsvorrichtung und einer reflexiven Anzeige.

### Beschreibung des Ausführungsbeispiels

Eine erfindungsgemäße Anzeigevorrichtung ist in einer Vielzahl von Fahrzeugen, so z.B. Flugzeugen, Schienenfahrzeugen und insbesondere Kraftfahrzeugen verwendbar. Die erfindungsgemäße Anzeigevorrichtung kann dabei für den Führer des jeweiligen Fahrzeugs oder auch für Passagiere des Fahrzeugs verwendet werden. Im Folgenden wird die Verwendung einer erfindungsgemäßen Anzeigevorrichtung in einem Kraftfahrzeug erläutert.

In der Figur 1 ist eine reflexive Anzeige 1 dargestellt, die an einer Mittelkonsole 4 eines Kraftfahrzeuges 5 angeordnet ist. In einem ersten Ausführungsbeispiel wird die reflexive Anzeigevorrichtung durch eine Beleuchtungsvorrichtung 2 angestrahlt, die in einem Fahrzeugdach 3 angeordnet ist, wobei das Licht der Beleuchtungsvorrichtung 2 in einem Strahlenkegel 24 abgestrahlt wird und die reflexive Anzeige 1 beleuchtet. Das auftreffende Licht wird von der reflexiven Anzeige verändert, insbesondere durch eine teilweise Absorption, und wird zu einem Betrachter reflektiert, der dann die in der reflexiven Anzeige 1 dargestellte Information aufnehmen kann.

Die reflexive Anzeige 1 wird über eine Ansteuereinheit 7 angesteuert. In der reflexiven Anzeige 1 ist ein Bild mit einer Vielzahl von Informationen darstellbar, wobei eine Bilddarstellung in der Ansteuereinheit 7 vorzugsweise zeilen- und spaltenweise berechnet wird. Die Ansteuereinheit 7 stellt Informationen dar, die ihr von einer Navigationsvorrichtung 8 zur Führung des Kraftfahrzeugs 5 in einem Straßennetz, einem Bordcomputer 9 zur Auswertung von Fahrzeugfunktionen- und Zuständen und/oder von einer Autoradiovorrichtung 10 zur Wiedergabe von gespeicherten Musikdaten sowie empfangenen Radioprogrammen dargestellt wird. Ferner können von der Autoradiovorrichtung 10 auch von dieser empfangene und/oder verarbeitete Fernsehsignale über die Ansteuereinheit 7 in der reflexiven Anzeige 1 zur Anzeige gebracht werden. Die reflexive Anzeige 1 ist vorzugsweise als eine reflexive Flüssigkristallanzeige ausgeführt, bei der zwischen einer reflektierenden Schicht und einer Abdeckung ein Flüssigkristall angeordnet ist, der in einzelnen Bildpunkten durch ein angelegtes elektrisches Feld ausrichtbar ist. Durch eine Ansteuerung der einzelnen Bildpunkte ist eine Bildinformation in der reflexiven Anzeige 1 darstellbar, indem durch ein an den Flüssigkristall in dem Bereich der jeweiligen Bildpunkte angelegtes elektrisches Feld die Polarisationsrichtung des eingestrahlten Lichts beeinflusst wird. Auf der dem Fahrzeuginnenraum abgewandten Seite der reflexiven Anzeige 1 ist ein Reflektor 14 angeordnet, der das Licht zurück durch die ihm vorgelagerte Flüssigkristallschicht reflektiert. In Abhängigkeit von der Beeinflussung durch den Flüssigkristall wird das reflektierte Licht in einem auf die reflexive Anzeige 1 aufgelegten Polarisationsfilter entweder absorbiert oder durchgelassen. Die reflexive Anzeige 1 ist dabei entweder mit durch die Windschutzscheibe 11 einfallendem Tageslicht oder mit dem von der Beleuchtungsvorrichtung 2 ausgestrahlten Licht beleuchtbar.

In einem weiteren Ausführungsbeispiel ist eine Beleuchtungsvorrichtung 20 an einem an der Windschutzscheibe 11 angebrachten Innenspiegelmodul 12, das auch den Fahrzeuginnenspiegel trägt, angeordnet und strahlt von dort aus auf die reflexive Anzeige 1. Ein von der zweiten Beleuchtungsvorrichtung 20 abgestrahlter Strahlenkegel 13 ist gestrichelt in der Figur 1 dargestellt.

In der Figur 2 ist die Beleuchtungsvorrichtung 2, die an dem Fahrzeugdach 3 angeordnet ist, im Detail dargestellt. Die Beleuchtungsvorrichtung 2 umfasst eine Lichtquelle 21, deren Licht von einem Reflektor 22 in Richtung einer Linse 23 reflektiert und in einem bevorzugten Ausführungsbeispiel auch fokussiert wird. Ausgehend von der Linse 23, die das Licht bündelt, durchläuft ein Strahlenkegel 24 eine Blende 25, mit der der Strahlenkegel 24 auf einen Umgebungsbereich 26 der reflexiven Anzeige 1 abgestimmt wird. Von einem Umgebungslichtsensor 27, der außerhalb des Umgebungsbereiches 26 angeordnet ist, ist das auf die reflexive Anzeige 1 fallende Licht messbar. Der Umgebungslichtsensor 27 wird vorzugsweise von der Ansteuereinheit 7 ausgewertet. Über die Ansteuereinheit 7 ist über in der Figur 1 nicht dargestellte Leitungen die Beleuchtungsvorrichtung 2 bzw. die Beleuchtungsvorrichtung 20 ansteuerbar.

Die Beleuchtungsvorrichtung 2 ist in eine Öffnung 28 des Fahrzeugdachs 3 eingebracht. Das Fahrzeugdach 3 weist einen Dachbereich 30 auf, der an einem Fahrzeugdachblech 31 befestigt ist. Der Dachbereich 30 ist vorzugsweise aus einem weichen Kunststoffmaterial gefertigt, in dem die Beleuchtungsvorrichtung 2 in der Weise montiert ist, dass ihre Öffnung mit der Blende 25 auf die reflexive Anzeige 1 gerichtet ist. In einem bevorzugten Ausführungsbeispiel beinhaltet die Blende 25 auch einen Polarisationsfilter, der in Abstimmung mit einem an der reflexiven Anzeige 1 angeordneten Polarisationsfilter das mit dem Strahlenkegel 24 ausgestrahlte Licht linear polarisiert. Die Lichtquelle 21 ist eine Glühlampe, vorzugsweise eine Halogenlampe. Ferner kann die Lichtquelle 21 auch eine kohärente Lichtquelle, insbesondere eine Laserlichtquelle sein, durch die polarisiertes Licht erzeugt wird. Hierdurch kann auf einen Polarisationsfilter an der Blende 25 verzichtet werden. Die Optik aus Linse 23 und Blende 25 dient in diesem Fall der Aufweitung und Strahlformung auf den Umgebungsbereich 26. Die Mittelkonsole ist insbesondere in dem Umgebungsbereich 26 mit einer matten Oberfläche versehen, so dass in dem Umgebungsbereich 26 auftreffendes Licht nicht in Richtung eines Fahrers gestreut wird und damit eine Blendung vermieden wird.

Die anhand der Figur 1 beschriebene, an dem Innenspiegelmodul 12 angeordnete Beleuchtungsvorrichtung 20 kann die Beleuchtungsvorrichtung 2 ersetzen, insbesondere bei der Verwendung in Cabrios oder in Fahrzeugen mit Schiebedach, bei denen keine geeignete Unterbringungsmöglichkeit in dem Dachbereich 30 besteht. Die Beleuchtungsvorrichtung 20 kann dabei von ihrem inneren Aufbau gleich der Beleuchtungsvorrichtung 2 ausgeführt werden.

Neben der beschriebenen Anordnung in der Mittelkonsole kann die reflexive Anzeige 1 auch an einem Vordersitz in einem Fahrzeug verwendet werden, bei dem mehrere Sitzreihen vorhanden sind. Entsprechend ist eine geeignete Position der Beleuchtungsvorrichtung 2 an dem Fahrzeugdach 3 zu wählen.

## Patentansprüche

1. Anzeigevorrichtung in einem Fahrzeug mit einer reflexiven Anzeige, **dadurch gekennzeichnet, dass** eine Beleuchtungsvorrichtung (2, 20) der reflexiven Anzeige (1) an einem Fahrzeugdach (3) oder an einem an das Fahrzeugdach (3) grenzenden Bereich einer Windschutzscheibe (11) angeordnet ist und dass die reflexive Anzeige (1) in einer Mittelkonsole (4) des Fahrzeugs oder an einem Vordersitz in dem Fahrzeug angeordnet ist.

2. Anzeigevorrichtung nach Anspruch 1, **dadurch gekennzeichnet, dass** die reflexive Anzeige (1) elektrisch ansteuerbar ist und dass in der reflexiven Anzeige (1) eine Vielzahl von Informationen darstellbar ist.

3. Anzeigevorrichtung nach einem der vorhergehenden Ansprüche, **dadurch gekennzeichnet, dass** die reflexive Anzeige (1) eine Flüssigkristallanzeige ist.

4. Anzeigevorrichtung nach einem der vorhergehenden Ansprüche, **dadurch gekennzeichnet, dass** das Licht der Beleuchtungsvorrichtung (2, 20) auf die reflexive Anzeige (1) fokussiert ist.

5. Anzeigevorrichtung nach einem der vorhergehenden Ansprüche, **dadurch gekennzeichnet, dass** durch die Beleuchtungsvorrichtung (2, 20) polarisiertes Licht erzeugbar ist.

6. Anzeigevorrichtung nach einem der vorhergehenden Ansprüche, **dadurch gekennzeichnet, dass** die Beleuchtungsvorrichtung (2, 20) in Abhängigkeit von einer Umgebungshelligkeit steuerbar ist.

7. Anzeigevorrichtung nach einem der vorhergehenden Ansprüche, **dadurch gekennzeichnet, dass** die Beleuchtungsvorrichtung (20) an einem Innenspiegelmodul (12) angeordnet ist.

## Claims

1. Display apparatus in a vehicle having a reflexive display, **characterized in that** an illuminating apparatus (2, 20) of the reflexive display (1) is arranged on a vehicle roof (3) or on a region bordering on the vehicle roof (3), of a windscreen (11), and **in that** the reflexive display (1) is arranged in a centre console (4) of the vehicle or on a front seat in the vehicle.

2. Display apparatus according to Claim 1, **characterized in that** the reflexive display (1) can be driven electrically, and **in that** a multiplicity of information items can be displayed in the reflexive display (1).

3. Display apparatus according to one of the preceding claims, **characterized in that** the reflexive display (1) is a liquid crystal display.

4. Display apparatus according to one of the preceding claims, **characterized in that** the light from the illumination apparatus (2, 20) is focussed on to the reflexive display (1).

5. Display apparatus according to one of the preceding claims, **characterized in that** the illuminating apparatus (2, 20) can produce polarized light.

6. Display apparatus according to one of the preceding claims, **characterized in that** the illuminating apparatus (2, 20) can be controlled as a function of an ambient brightness.

7. Display apparatus according to one of the preceding claims, **characterized in that** the illuminating apparatus (20) is arranged on an interior rear-view mirror module (12).

## Revendications

1. Dispositif d'affichage dans un véhicule comportant un affichage réfléchissant,
**caractérisé en ce que**
un dispositif d'éclairage (2, 20) de l'affichage réfléchissant (1) est placé au plafond du véhicule (3) ou dans une zone d'un pare-brise (11) contiguë au plafond du véhicule (3), et
l'affichage réfléchissant (1) est disposé dans une console centrale (4) du véhicule ou dans le véhicule sur un siège avant.

2. Dispositif d'affichage selon la revendication 1,
**caractérisé en ce que**
l'affichage réfléchissant (1) peut être commandé à l'électricité et un grand nombre d'informations peut être représenté dans l'affichage réfléchissant (1).

3. Dispositif d'affichage selon l'une des revendications précédentes,
**caractérisé en ce que**
l'affichage réfléchissant (1) est un affichage à cristaux liquides.

4. Dispositif d'affichage selon l'une des revendications précédentes,
**caractérisé en ce que**
la lumière du dispositif d'éclairage (2, 20) est concentrée sur l'affichage réfléchissant (1).

5. Dispositif d'affichage selon l'une des revendications précédentes,
**caractérisé en ce que**
de la lumière polarisée peut être produite par le dispositif d'éclairage (2, 20).

6. Dispositif d'affichage selon l'une des revendications précédentes,
**caractérisé en ce que**
le dispositif d'éclairage (2, 20) peut être commandé en fonction d'une luminosité de l'environnement.

7. Dispositif d'affichage selon l'une des revendications précédentes,
**caractérisé en ce que**
le dispositif d'éclairage (20) est placé dans un module de rétroviseur intérieur (12).
